# EUROPÄISCHE PATENTSCHRIFT

(11) **EP 0 453 746 B1**
(45) Veröffentlichungstag und Bekanntmachung des Hinweises auf die Patenterteilung: **13.07.1994**
(21) Anmeldenummer: 91103638.2
(22) Anmeldetag: 09.03.1991
(51) Int. Cl.: B65D 81/02

(54) **Verpackungsmaterial**
Packaging material
Matériel d'emballage

(30) Priorität: 26.04.1990 DE 9004714 U; 25.08.1990 DE 9012268 U
(43) Veröffentlichungstag der Anmeldung: 30.10.1991
(73) Patentinhaber: SÜD-CHEMIE AG, D-80333 München (DE)
(72) Erfinder: Krüger, Bernd, D-35415 Giessen (DE)
(74) Vertreter: Reitzner, Bruno, Dr.

(56) Entgegenhaltungen:
- DE-A- 3 839 225
- DE-A- 3 900 874
- DE-U- 1 793 644

## Beschreibung

Die Erfindung betrifft ein Verpackungsmaterial aus kleinteiligen, gleichartigen Einzelstücken zum Verfüllen von Hohlräumen in Verpackungsbehältern, mit denen Gegenstände verpackt sind, deren Konturen nur ungenau mit den Umrissen der Verpackungsbehälter übereinstimmen, die aber trotzdem ortsfest in den Verpackungsbehältern ausgepolstert werden sollen, enthaltend einen Füllstoff in Form von Papierabfällen aus Reißwölfen oder dergleichen, die von einer Außenhülle aus Papier umschlossen sind.

In der Verpackungsindustrie stellt sich ein Problem dieser Art relativ häufig, vor allem bei empfindlichen Meßinstrumenten. In großem Umfang ist dafür früher Holzwolle verwendet worden, die aber relativ teuer ist und im Gebrauch verkrümelt, so daß sie nicht für jeden Verpackungsgegenstand geeignet ist. Seit langem wird deshalb stattdessen sehr häufig Kunststoff, beispielsweise Polystyrol, verwendet, der in großer Menge kleinteilig in die Verpackungsresträume eingefüllt wird. Wenn die einzelnen Kunststoffkörper zweckmäßig bemessen sind, dann stellt sich in den verbleibenden Hohlräumen der Verpackungsbehälter ein relativ lockeres und leichtes Gefüge dieser Kunststoffkörper ein, das aber gleichwohl die stabile Lage des Verpakkungsgegenstandes zu garantieren vermag, wenn das Verpackungsmaterial korrekt angewendet wird.

Leider sind derartige Kunststoffkörper umweltunverträglich; sie sind für die Entsorgung denkbar ungeeignet. Auch eine Mehrfach-Verwendung hat sich bisher nicht durchsetzen können, weil die Kunststoffkörper bei ihrer Wiederverwendung nicht mehr. elastisch genug sind, bleibende Verformungen zu einer wesentlich dichteren Packung der Kunststoffkörper führen und diese, ebenso wie die Holzwolle, zum Verkrümeln neigen.

Aus der DE-C-38 39 225 ist ein Verfahren zur Herstellung eines stoßdämpfenden Verpackungspolsters bekannt, das aus einen natürlichen, umweltschonend abbaubaren Füllmaterial und einem aus einem reißfesten Papierstreifen gefertigten Hüllmaterial besteht, wobei der Papierstreifen um zueinander parallel verlaufende Linien zu einem Schlauch gebogen wird und die freien, überstehenden Randbereiche flächig miteinander verbunden werden.

Um bei Verwendung von Stroh oder halmartigen Produkten ein Durchstoßen des Hüllmaterials zu verhindern, eine Gefahr des Aufreißens der Hülle und ein Herausfallen von Füllmaterial aus der Hülle zu vermeiden, werden die halmartigen Produkte gekürzt und durch Mahlen der Länge aufgespalten. Die flächig miteinander verbundenen Randbereiche des Papierstreifens werden vor dem Verbinden durch weitere Faltlinien aufeinander zu gebogen, nach außen abgeknickt und an der Schlauchhülle befestigt, wobei die Enden des gefüllten Schlauches abschließend geschlossen werden.

Das bekannte Verpackunqsmaterial ist aufwendig, da hier zunächst die halmartigen Produkte vorbehandelt werden müssen, wobei hier durch das Walzen sehr viele Staubpartikel anfallen, die insbesondere für den späteren Gebrauch nachteilig sind. Darüberhinaus erfordert diese bekannte Verpakkung ein äußerst reißfestes Papier, was sich negativ auf die stoßdämpfende Eigenschaft des Verpakkungsmaterials auswirkt.

Aus der DE-A-3 900 874 ist ein Füllstoff für nachgiebige Behälter mit flexiblem Umhüllungsmaterial bekannt, daß dadurch gekennzeichnet ist, daß der Füllstoff wenigstens teilweise aus stückigem Papier besteht. Das Umhüllungsmaterial kann ein Gewebe aus Textilen oder Papier-Fasern sein, oder es kann Papier sein, dessen Fasern relativ leicht gegeneinander verschiebbar sind. Das Umhüllungsmaterial ist nicht heißsiegelbar und feuchtigkeitsempfindlich. Zur Erzielung einer gewissen Festigkeit muß es verhältnismäßig dick sein.

Aus dem DE-U-1 793 644 ist eine Verpackung bekannt, die durch eine Hülle aus Kunststoffolie, Papier oder dergleichen mit einer Füllung aus Holz- oder Papierwolle gekennzeichnet ist. Bei Verwendung einer Kunststoffolie ist die erforderliche Luftdurchlässigkeit nicht gegeben, während Papier nicht heißsiegelfähig ist und ein verhältnismäßig dickes Material verwendet werden muß, um die erforderliche Festigkeit zu erzeugen.

Die Erfindung hat sich demzufolge die Aufgabe gestellt, ein Verpackungsmaterial der eingangs näher bezeichneten Art herzustellen, das diese Mängel nicht besitzt, sondern mehrfach verwendbar, umweltfreundlich und billig ist, ohne daß dabei die Vorteile verloren gehen, die mit den bisher gebräuchlichen Füllmaterialien verbunden waren.

Erfindungsgemäß wird die Aufgabe dadurch gelöst, daß die Papierabfälle von einer heißsiegelfähigen Außenhülle aus grobporigem, gut luftdurchlässigem, dünnem Papier umschlossen sind, wobei die Außenhülle vorteilhaft Kugelform besitzen kann, während die Papierabfälle am besten als Schnipsel von 8 bis 12 mm Länge und 2 bis 3 mm Breite verwendet werden. Die Außenhülle besteht vorteilhaft aus heißsiegelbarer Bäkerseide; sie kann gefalzt oder geheftet, bzw. verklebt sein und sollte bei Kugelform einen Durchmesser von etwa 1 bis 4 cm aufweisen oder bei anderen stereometrischen Formen ein etwa gleich großes Volumen umfassen.

Die Erfindung bietet gegenüber der Verwendung von Kunststoff oder Stroh als Verpackungsmaterial mehrere Vorteile. So kann für die Füllung in großem Umfang auf Altpapier zurückgegriffen werden. Die mehrfache Verwendung des erfindungsgemäßen Verpackungsmaterials ist vor allem deshalb relativ leicht zu bewerkstelligen, weil es zum einen genügend Elastizität aufweist, um auch Folgeverpackungen sicher ausführen zu können, und zum anderen lassen sich die Einzelstücke bequem aufnehmen, wenn eine mit ihnen ausgeführte Verpackung gelöst wird, da sie im Gegensatz zu den meisten vergleichbaren Verpackungsmaterialien nicht verkrümeln. Sie können auch problemlos hergestellt werden, vergleichbar etwa der Fertigung von gefüllten-Schlauchbeuteln.

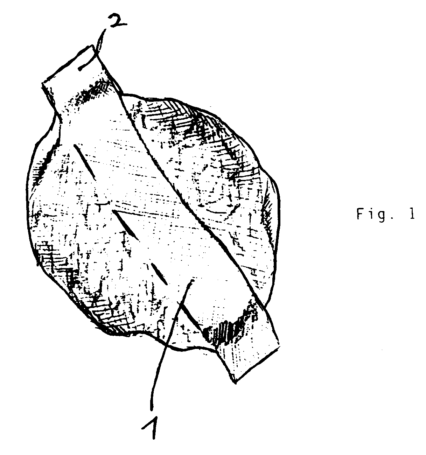

In der einzigen Figur 1 der Zeichnung ist - leicht vergrößert - ein Ausführungsbeispiel für die Erfindung dargestellt. Es zeigt vor allem die Außenhülle in konfektionierter Form, die aus Bäckerseide (UF-Papier) besteht, das durch einen Längs- und einen Querfalz 1 und 2 seine Raumform erfährt.

## Patentansprüche

1. Verpackungsmaterial aus kleinteiligen, gleichartigen Einzelstücken zum Verfüllen von Hohlräumen in Verpackungsbehältern, mit denen Gegenstände verpackt sind, deren Konturen nur ungenau mit den Umrissen der Verpackungsbehälter übereinstimmen, die aber totzdem ortsfest in den Verpackungsbehältern ausgepolstert werden sollen, enthaltend einen Füllstoff in Form von Papierabfällen aus Reißwölfen oder dergleichen, die von einer Außenhülle aus Papier umschlossen sind, dadurch gekennzeichnet, daß die Papierabfälle von einer heißsiegelfähigen Außenhülle aus grobporigem, gut luftdurchlässigem, dünnem Papier umschlossen sind.

2. Verpackungsmaterial nach Anspruch 1, dadurch **gekennzeichnet**, daß als Papierabfälle Schnipsel von etwa 8 bis 12 mm Länge und etwa 2 bis 3 mm Breite verwendet werden.

3. Verpackungsmaterial nach Anspruch 1 oder 2, dadurch **gekennzeichnet**, daß die Außenhülle aus sogenannter Bäckerseide (UF-Papier) besteht.

4. Verpackungsmaterial nach einem der Ansprüche 1 bis 3, dadurch **gekennzeichnet**, daß die Außenhülle gefalzt oder geheftet bzw. verklebt ist.

5. Verpackungsmaterial nach einem der Ansprüche 1 bis 4, dadurch **gekennzeichnet**, daß es bei Kugelform der Außenhülle einen Durchmesser von etwa 1 bis 10 cm aufweist.

6. Verpackungsmaterial nach einem der Ansprüche 1 bis 4, dadurch **gekennzeichnet**, daß bei einer anderen stereometrischen Form ein etwa gleich großes Volumen wie bei der Kugelform umfaßt wird.

## Claims

1. A packaging material of small-sized, homogeneous individual pieces for filling cavities in packaging containers, with which articles are packaged, and the contours of which conform only approximately to the outlines of the packaging containers but which, nevertheless, are to be cushioned stationarily in the packaging containers, comprising a filler in the form of waste paper from shredders and the like, which are enclosed by an outer covering of paper, characterised in that the waste paper is enclosed by a heat-sealable outer covering of coarsely pored thin paper having good air permeability.

2. A packaging material according to Claim 1, characterised in that shreds of waste paper of approximately 8 to 12 mm in length and approximately 2 to 3 mm in width are used.

3. A packaging material according to Claim 1 or 2, characterised in that the outer cover consists of so-called wrapping tissue (tissue paper or "Bakers' silk").

4. A packaging material according to any one of Claims 1 to 3, characterised in that the outer cover is folded or stitched and/or glued.

5. A packaging material according to any one of Claims 1 to 4, characterised in that when the outer cover is of ball-shaped it has a diameter of approximately 1 to 10 cm.

6. A packaging material according to any one of Claims 1 to 4, characterised in that with a different stereometric shape an approximately equally large volume is enclosed as with the ball shape.

## Revendications

1. Matériau d'emballage composé de petits éléments distincts identiques destinés à remplir des espaces creux dans des récipients d'emballage servant à emballer des objets dont les contours ne correspondent pas précisément aux formes du récipient d'emballage, mais qui doivent être maintenus par un rembourrage dans les récipients d'emballage, contenant une matière de remplissage sous la forme de déchets de papier provenant de broyeurs ou similaires, qui sont entourés par une enveloppe extérieure en papier, caractérisé en ce que les déchets de papier sont entourés par une enveloppe extérieure apte à être thermosoudée faite de papier mince à grands pores, bien perméable à l'air.

2. Matériau d'emballage selon la revendication 1, caractérisé en ce que l'on utilise comme déchets de papier des rognures d'environ 8 à 12 mm de longueur et d'environ 2 à 3 mm de largeur.

3. Matériau d'emballage selon la revendication 1 ou 2, caractérisé en ce que l'enveloppe extérieure se compose de papier dit mousseline (papier ultra-fin).

4. Matériau d'emballage selon l'une ou l'ensemble des revendications 1 à 3, caractérisé en ce que l'enveloppe extérieure est pliée ou agrafée ou collée.

5. Matériau d'emballage selon l'une ou l'ensemble des revendications 1 à 4, caractérisé en ce qu'il présente pour une enveloppe extérieure de forme sphérique un diamètre de 1 à 10 cm environ.

6. Matériau d'emballage selon l'une ou l'ensemble des revendications 1 à 4, caractérisé en ce que pour une autre forme géométrique le volume renfermé est approximativement égal à celui de la forme sphérique.
